# EUROPEAN PATENT APPLICATION

(11) **EP 3 438 568 A1**
(43) Date of publication of application: **06.02.2019**
(21) Application number: 17775607.9
(22) Date of filing: 31.03.2017
(51) Int. Cl.: F25B 21/00

(54) **HEAT EXCHANGER AND MAGNETIC HEAT PUMP DEVICE**

(30) Priority: 31.03.2016 JP 2016073403
(71) Applicant: Fujikura Ltd., Tokyo 135-8512 (JP)
(72) Inventor: UENO, Kota, Sakura-shi Chiba 285-8550 (JP); KONDO, Masahiro, Sakura-shi Chiba 285-8550 (JP); NOMURA, Ryujiro, Sakura-shi Chiba 285-8550 (JP); KIZAKI, Takeshi, Sakura-shi Chiba 285-8550 (JP); ISHIKAWA, Kohki, Sakura-shi Chiba 285-8550 (JP)
(74) Representative: Ter Meer Steinmeister & Partner
(86) International application number: PCT/JP2017/013808
(87) International publication number: WO 2017/171076

(57) **Abstract**

Provided is an MCM heat exchanger 10 including linear bodies formed of a magnetocaloric material having a magnetocaloric effect and a case 13 filled with the linear bodies, in which each of the linear bodies is a stranded wire 12 obtained by twisting at least two wires 121.

## Description

### TECHNICAL FIELD

The present invention relates to a heat exchanger and a magnetic heat pump device including a wire formed of a magnetocaloric material.

For designated countries that are permitted to be incorporated by reference in the literature, the contents described in Japanese Patent Application No. 2016-073403 filed in Japan on March 31, 2016 are incorporated herein by reference and are regarded as a part of the description of this specification.

### BACKGROUND ART

As a heat exchanger including a magnetic body having a magnetocaloric effect, a heat exchanger is known in which a plurality of linear magnetic bodies (hereinafter, wires) formed of a magnetocaloric material are overlapped in a direction intersecting the longitudinal direction of the wire to form an assembly and the assembly is inserted into a tubular case (for example, see Patent Document 1).

### CITATION LIST

### PATENT DOCUMENT

Patent Document 1: JP 2013-64588 A

### SUMMARY OF THE INVENTION

### PROBLEM TO BE SOLVED BY THE INVENTION

In the heat exchanger described in Patent Document 1, when the wire becomes thinner, a surface area of the wire contacting a heat exchange medium increases so that a heat exchange efficiency is improved, while a gap between the wires through which the heat exchange medium passes is narrowed so that the pressure loss of the heat exchange medium increases. Accordingly, energy necessary for making the heat exchange medium flow increases.

An object of the invention is to provide a heat exchanger and a magnetic heat pump device capable of suppressing an increase in pressure loss of a heat exchange medium and securing a contact area between a wire and the heat exchange medium.

### MEANS FOR SOLVING PROBLEM

[1] A heat exchanger according to the invention includes linear bodies formed of a magnetocaloric material having a magnetocaloric effect and a case filled with the linear bodies, in which each of the linear bodies is a stranded wire obtained by twisting at least two wires.

[2] In the above-described invention, the stranded wire may be obtained by twisting two to four wires.

[3] A magnetic heat pump device according to the invention includes the above-described heat exchanger.

### EFFECT OF THE INVENTION

In the invention, since a plurality of stranded wires obtained by twisting at least two wires are filled in a case, it is possible to decrease the filling rate of the wires in the case while suppressing a decrease in a contact area between the wire and a heat exchange medium in comparison with a case where wires are filled in the case without twisting. Accordingly, it is possible to suppress pressure loss of the heat exchange medium and to secure a contact area between the wire and the heat exchange medium.

### BRIEF DESCRIPTION OF DRAWINGS

Fig. 1 is a diagram illustrating an overall configuration of a magnetic heat pump device including a MCM heat exchanger according to an embodiment of the invention and is a diagram illustrating a state where a piston is located at a first position;
Fig. 2 is a diagram illustrating an overall configuration of the magnetic heat pump device including the MCM heat exchanger according to the embodiment of the invention and is a diagram illustrating a state where the piston is located at a second position;
Fig. 3 is an exploded perspective view illustrating a configuration of the MCM heat exchanger according to the embodiment of the invention;
Fig. 4 is a cross-sectional view taken along an extending direction of the MCM heat exchanger according to the embodiment of the invention;
Fig. 5 is a cross-sectional view taken along a line V-V of Fig. 4;
Fig. 6 is an enlarged view of a plurality of stranded wires filled in the MCM heat exchanger according to the embodiment of the invention;
Fig. 7 is a graph illustrating a relation between a contact area (m²) of MCM with a refrigerant of Specimens 1 to 7 and an average flow rate (m/sec) of a refrigerant of Specimens 1 to 7;
Fig. 8 is a graph illustrating a relation between a cycle frequency (Hz) of the magnetic heat pump device provided with Specimen 1 or Specimen 2 and an output density (W/kg) of the magnetic heat pump device; and
Fig. 9 is a cross-sectional view of an MCM heat exchanger according to another embodiment.

### MODE(S) FOR CARRYING OUT THE INVENTION

Hereinafter, an embodiment of the invention will be described with reference to the drawings.

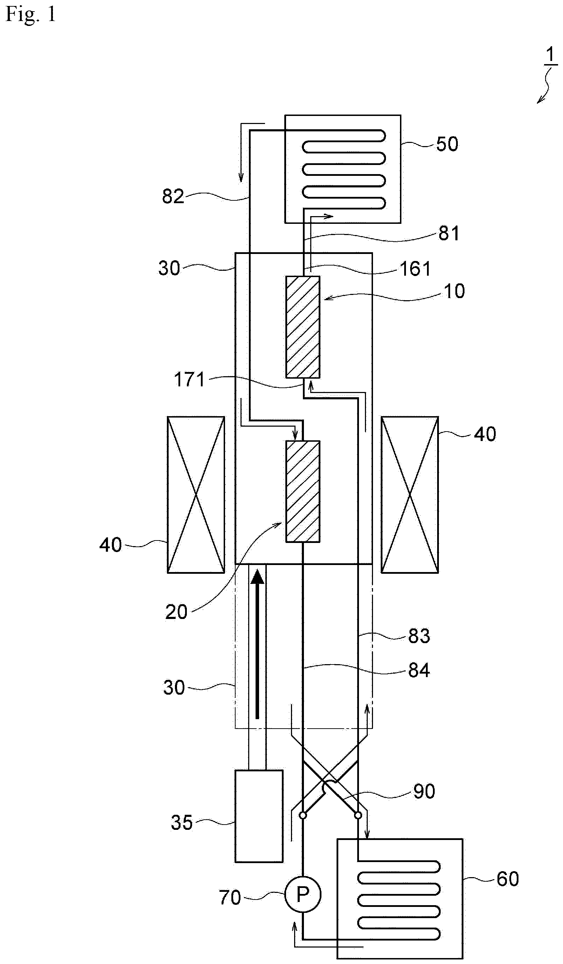

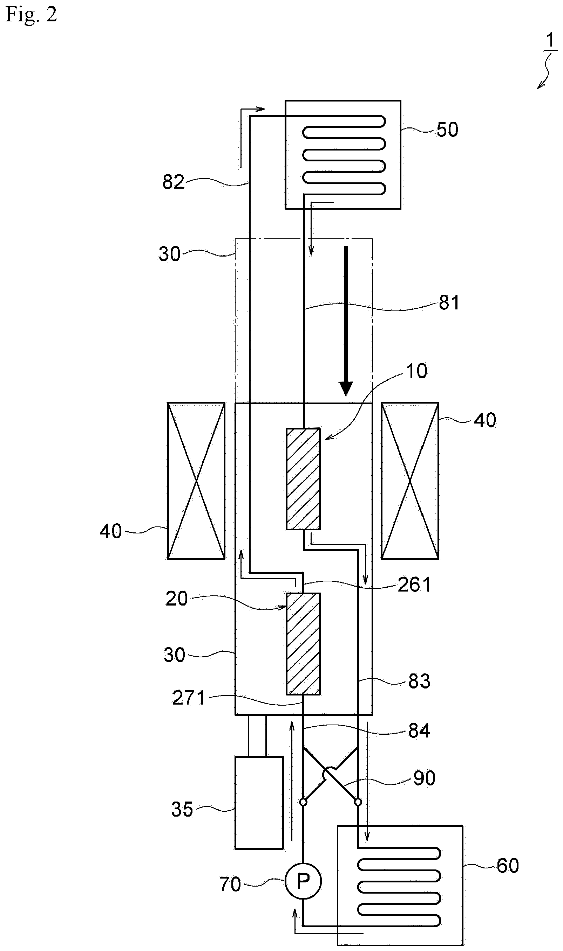

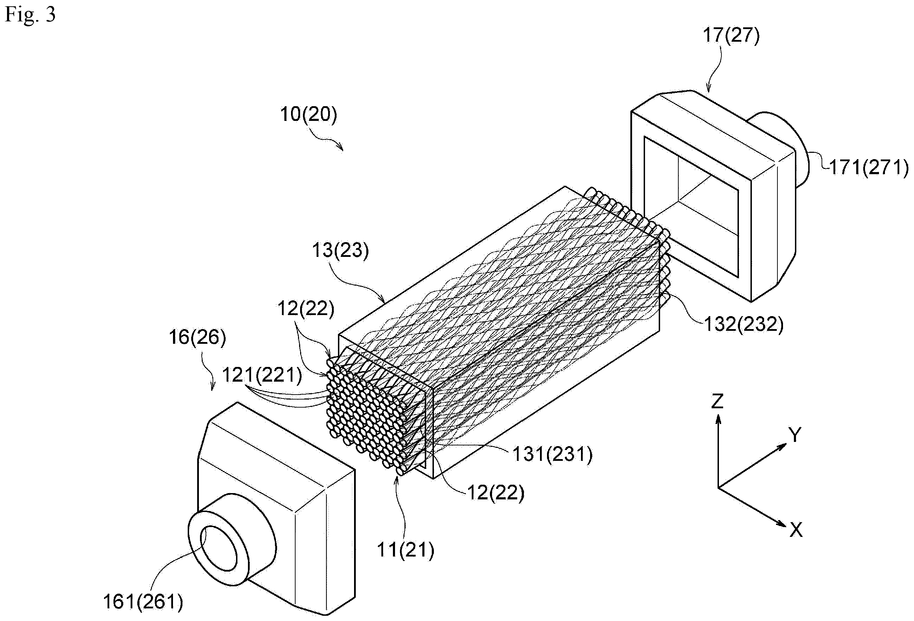

Figs. 1 and 2 are diagrams illustrating an overall configuration of a magnetic heat pump device 1 including first and second MCM heat exchangers 10 and 20 according to an embodiment of the invention. Figs. 3 to 6 are diagrams illustrating the first and second MCM heat exchangers 10 and 20 of this embodiment.

A magnetic heat pump device 1 of this embodiment is a heat pump device using a magnetocaloric effect and includes, as illustrated in Figs. 1 and 2, first and second MCM heat exchangers 10 and 20, a piston 30, a permanent magnet 40, a low temperature side heat exchanger 50, a high temperature side heat exchanger 60, a pump 70, pipes 81 to 84, and a switching valve 90.

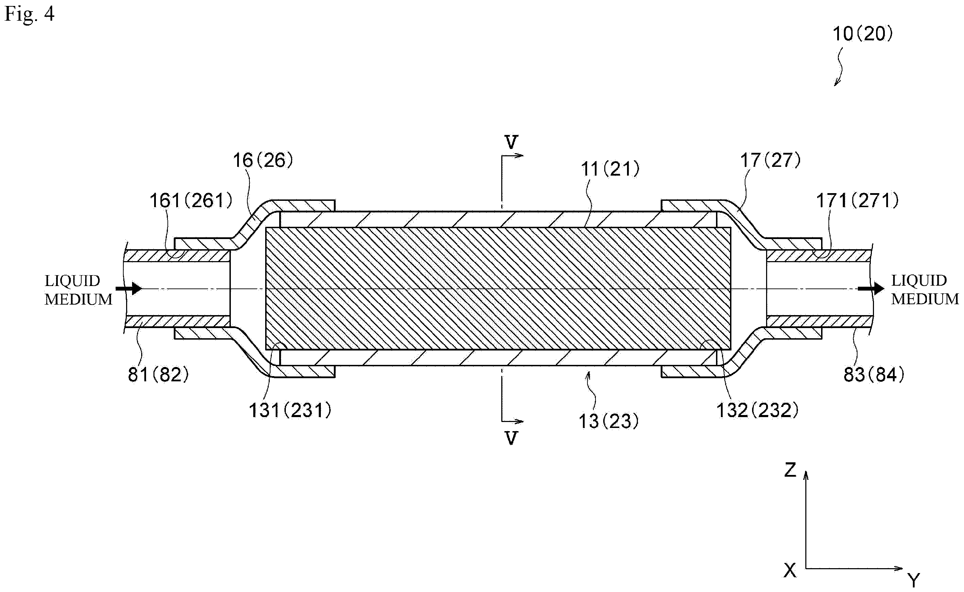

As illustrated in Figs. 3 and 4, the first MCM heat exchanger 10 includes an assembly 11 which is obtained from a bundle of a plurality of stranded wires (child stranded wires) 12, a case 13 which accommodates the assembly 11, and a first adapter 16 and a second adapter 17 which are connected to the case 13, and a plurality of the stranded wires 12 are filled in the case 13.

Since the first MCM heat exchanger 10 and the second MCM heat exchanger 20 have the same configuration, only the configuration of the first MCM heat exchanger 10 will be described below, the configuration of the second MCM heat exchanger 20 will be omitted, and a description of the configuration of the first MCM heat exchanger 10 is used for reference. Further, Figs. 3 to 6 illustrate the first MCM heat exchanger 10. For the second MCM heat exchanger 20, corresponding reference numerals are added in parenthesis and a description thereof is omitted.

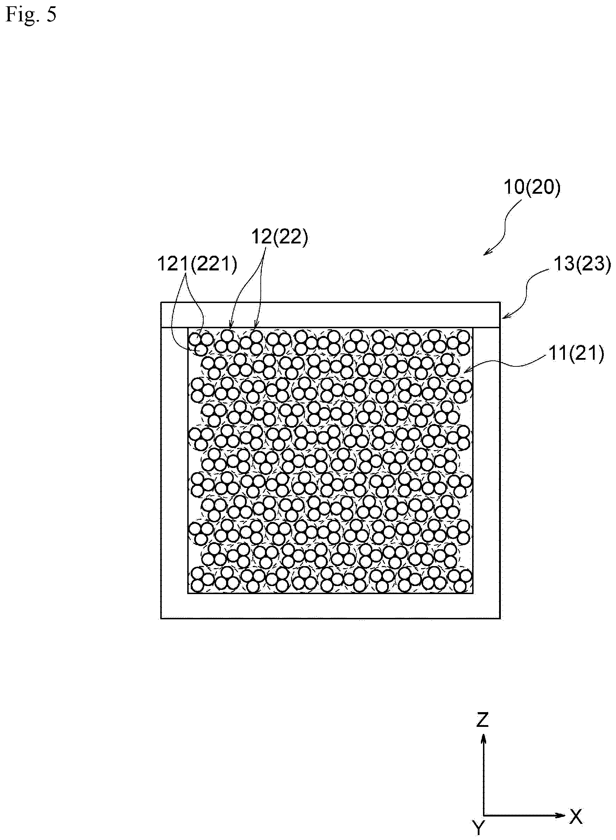

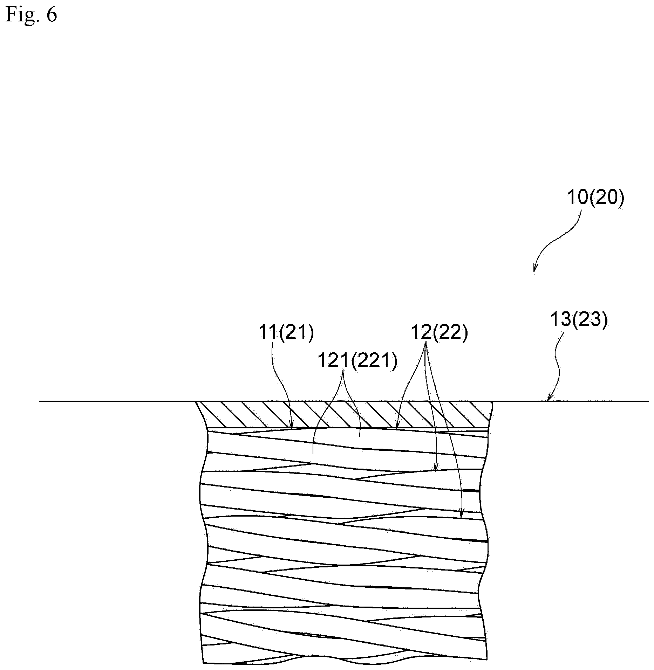

As illustrated in Figs. 5 and 6, the stranded wire 12 is formed by at least two (for example, three in Fig. 5) twisted wires 121. The wire 121 is a linear magnetic body having a circular cross-sectional shape and composed of a magnetocaloric material (MCM) having a magnetocaloric effect. When a magnetic field is applied to the wire 121 formed of MCM, magnetic entropy decreases as electron spins are aligned and the wire 121 generates heat so that a temperature rises. On the other hand, when the magnetic field is removed from the wire 121, the magnetic entropy increases as the electron spins become cluttered and the wire 121 absorbs heat so that a temperature falls.

The MCM forming the wire 121 is not particularly limited as long as it is a magnetic body. However, a magnetic body having a high magnetocaloric effect, for example, in a normal temperature range is desirable. Detailed examples of such MCMs include gadolinium (Gd), gadolinium alloy, lanthanum-iron-silicon (La-Fe-Si) based compounds, and the like.

A wire diameter of the wire 121 is not particularly limited, but for example, 0.1 to 2.0 mm is desirable. It is desirable to use a stranded wire obtained by twisting two to four wires 121 as the stranded wire 12, but the stranded wire may be obtained by twisting four or more wires 121. As a direction of twisting at least two wires 121, a clockwise rotation direction or a counter-clockwise rotation direction may be used.

Here, in the first and second MCM heat exchangers 10 and 20 using the stranded wire 12 obtained by twisting two to four wires 121, a difference in distance between the outer periphery of the stranded wire 12 and a circumscribed circle of the stranded wire 12 becomes larger than that of the MCM heat exchanger using a stranded wire obtained by twisting four or more wires 121. For that reason, in the first and second MCM heat exchangers 10 and 20 using the stranded wire 12 obtained by twisting two or three wires 121, since a relatively large gap between the stranded wires 12 can be formed, a liquid medium passage is secured.

The assembly 11 may be formed by a bundle of the plurality of mutually juxtaposed stranded wires 12 or may be obtained by twisting the plurality of stranded wires 12. As a method of twisting the plurality of stranded wires 12 of the assembly 11, collective twisting, concentric twisting, and the like can be exemplified. The collective twisting is a twisting method in which the plurality of stranded wires 12 are bundled together and twisted about the axis of the bundle. The concentric twisting is a twisting method in which one or the plurality of stranded wires 12 are twisted to one stranded wire 12. The twisting direction of the plurality of stranded wires 12 may be a clockwise rotation direction or a counter-clockwise rotation direction.

In the assembly 11 obtained by bundling the stranded wires 12, a passage is formed between the side surfaces of the adjacent stranded wires 12. In order to facilitate understanding, Figs. 3 and 5 illustrate the assembly 11 having a smaller number of stranded wires 12 than the actual number, but in fact, the assembly 11 has more than several hundred stranded wires 12.

As illustrated in Figs. 3 to 5, the assembly 11 is inserted through the case (casing) 13. The case 13 is formed in a rectangular tubular shape. A first opening 131 and a second opening 132 are respectively formed at one end and the other end of the case 13 in the axial direction. The stranded wire 12 linearly extends and the extending direction of the stranded wire 12 matches the axial direction of the case 13. Further, the centers of the first and second openings 131 and 132 are located to be coaxial to the center of the assembly 11.

As illustrated in Fig. 3, the first adapter 16 is connected to the first opening 131 of the case 13 and the second adapter 17 is connected to the second opening 132. As the first and second adapters 16 and 17, for example, a heat shrinkable tube, a resin molded product, a metal processed product, or the like can be used.

The first adapter 16 has a first connection port 161 formed at a position opposite to the connection side with the first opening 131. The first connection port 161 communicates with the low temperature side heat exchanger 50 through the first low temperature side pipe 81. The second adapter 17 also has a second connection port 171 formed at a position opposite to the connection side with the second opening 132. The second connection port 171 communicates with the high temperature side heat exchanger 60 through the first high temperature side pipe 83. The centers of the first and second connection ports 161 and 171 are located to be coaxial to the center of the assembly 11.

Similarly, an assembly 21 obtained by bundling a plurality of stranded wires 22 is also accommodated in a case 23 of the second MCM heat exchanger 20 and the plurality of stranded wires 22 are filled in the case 23. Then, similarly to the first MCM heat exchanger 10, a third adapter 26 is connected to a third opening 231 of the case 23 and a fourth adapter 27 is connected to a fourth opening 232 of the case 23. The second MCM heat exchanger 20 communicates with the low temperature side heat exchanger 50 through the second low temperature side pipe 82 connected to a third connection port 261 of the third adapter 26. Meanwhile, the second MCM heat exchanger 20 communicates with the high temperature side heat exchanger 60 through the second high temperature side pipe 84 connected to a fourth connection port 271 of the fourth adapter 27.

In this embodiment, a wire 221 of the second MCM heat exchanger 20 has the same configuration as the wire 121 of the first MCM heat exchanger 10. Further, the stranded wire 22 of the second MCM heat exchanger 20 has the same configuration as the stranded wire 12 of the first MCM heat exchanger 10. Further, the assembly 21 formed of the stranded wire 22 of the second MCM heat exchanger 20 has the same configuration as the assembly 11 formed of the stranded wire 12 of the first MCM heat exchanger 10. Furthermore, the case 23 of the second MCM heat exchanger 20 has the same configuration as the case 13 of the first MCM heat exchanger 10.

For example, as illustrated in Figs. 1 and 2, in a case where an air conditioner using the magnetic heat pump device 1 of this embodiment is operated in a cooling mode, an indoor place is cooled by a heat exchange between the low temperature side heat exchanger 50 and the inside air, and heat is emitted to an outdoor place by a heat exchange between the high temperature side heat exchanger 60 and the outside air.

On the contrary, in a case where the air conditioner is operated in a warming mode, the indoor place is warmed by a heat exchange between the high temperature side heat exchanger 60 and the inside air, and heat is absorbed from the outdoor place by a heat exchange between the low temperature side heat exchanger 50 and the outside air.

As described above, a circulation path including four MCM heat exchangers 10, 20, 50, and 60 is formed by two low temperature side pipes 81 and 82 and two high temperature side pipes 83 and 84, and a liquid medium is pressure-fed in the circulation path by the pump 70. As a detailed example of the liquid medium, for example, a liquid such as water, an antifreeze solution, an ethanol solution, or a mixture thereof can be exemplified.

The first and second MCM heat exchangers 10 and 20 are accommodated in the piston 30. The piston 30 can move in a reciprocating manner between a pair of permanent magnets 40 by the actuator 35. Specifically, the piston 30 can move in a reciprocating manner between a "first position" illustrated in Fig. 1 and a "second position" illustrated in Fig. 2. As an example of the actuator 35, for example, an air cylinder or the like can be exemplified.

Here, the "first position" is a position of the piston 30 when the first MCM heat exchanger 10 is not interposed between the permanent magnets 40 and the second MCM heat exchanger 20 is interposed between the permanent magnets 40. On the contrary, the "second position" is a position of the piston 30 when the first MCM heat exchanger 10 is interposed between the permanent magnets 40 and the second MCM heat exchanger 20 is not interposed between the permanent magnets 40.

Instead of the first and second MCM heat exchangers 10 and 20, the permanent magnet 40 may be moved in a reciprocating manner by the actuator 35. Alternatively, an electromagnet having a coil may be used instead of the permanent magnet 40. In this case, a mechanism of moving the MCM heat exchangers 10 and 20 or the magnet is not necessary. Further, when the electromagnet having the coil is used, the magnitude of the magnetic field applied to the wires 121 and 221 may be changed instead of applying/removing of the magnetic field with respect to the wires 121 and 221 of the MCM heat exchangers 10 and 20.

The switching valve 90 is provided at the first high temperature side pipe 83 and the second high temperature side pipe 84. In synchronization with the operation of the piston 30, the switching valve 90 can switch the liquid medium supply destination of the pump 70 to the first MCM heat exchanger 10 or the second MCM heat exchanger 20 and switch the connection destination of the high temperature side heat exchanger 60 to the second MCM heat exchanger 20 or the first MCM heat exchanger 10.

Next, an operation of the magnetic heat pump device 1 of this embodiment will be described.

First, when the piston 30 is moved to the "first position" illustrated in Fig. 1, the wire 121 of the first MCM heat exchanger 10 is demagnetized so that the temperature falls, and the wire 221 of the second MCM heat exchanger 20 is magnetized so that the temperature rises.

At the same time, a first path (the pump 70 → the first high temperature side pipe 83 → the first MCM heat exchanger 10 → the first low temperature side pipe 81 → the low temperature side heat exchanger 50 → the second low temperature side pipe 82 → the second MCM heat exchanger 20 → the second high temperature side pipe 84 → the high temperature side heat exchanger 60 → the pump 70) is formed by the switching valve 90.

For this reason, the liquid medium is cooled by the wire 121 of the first MCM heat exchanger 10 of which a temperature decreases due to a demagnetization and the liquid medium is supplied to the low temperature side heat exchanger 50 so that the low temperature side heat exchanger 50 is cooled.

Meanwhile, the liquid medium is heated by the wire 221 of the second MCM heat exchanger 20 of which a temperature increases due to a magnetization and the liquid medium is supplied to the high temperature side heat exchanger 60 so that the high temperature side heat exchanger 60 is heated.

Next, when the piston 30 is moved to the "second position" illustrated in Fig. 2, the wire 121 of the first MCM heat exchanger 10 is magnetized so that its temperature rises and the wire 221 of the second MCM heat exchanger 20 is demagnetized so that its temperature falls.

At the same time, a second path (the pump 70 → the second high temperature side pipe 84 → the second MCM heat exchanger 20 → the second low temperature side pipe 82 → the low temperature side heat exchanger 50 → the first low temperature side pipe 81 → the first MCM heat exchanger 10 → the first high temperature side pipe 83 → the high temperature side heat exchanger 60 → the pump 70) is formed by the switching valve 90.

For this reason, the liquid medium is cooled by the wire 221 of the second MCM heat exchanger 20 of which a temperature decreases due to a demagnetization and the liquid medium is supplied to the low temperature side heat exchanger 50 so that the low temperature side heat exchanger 50 is cooled.

Meanwhile, the liquid medium is heated by the wire 121 of the first MCM heat exchanger 10 of which a temperature increases due to a magnetization, and the liquid medium is supplied to the high temperature side heat exchanger 60 so that the high temperature side heat exchanger 60 is heated.

Then, when applying and removing of the magnetic field with respect to the wires 121 and 221 inside the first and second MCM heat exchangers 10 and 20 are repeated by the repeated reciprocating movement of the piston 30 between the "first position" and the "second position", the cooling of the low temperature side heat exchanger 50 and the heating of the high temperature side heat exchanger 60 are continued.

Incidentally, for the MCM heat exchanger of the magnetic cooling device, an MCM particle having a particle diameter of 0.3 mm is generally used. Here, the present inventor has performed an experiment to check whether or not an MCM heat exchanger using a wire of MCM exhibits an advantageous effect by the comparison with an MCM heat exchanger using MCM particles having a particle diameter of 0.3 mm. Hereinafter, this experiment and its result will be described.

In this experiment, first, Specimens 1 to 7 were prepared as follows and an average flow rate (m/sec) of a liquid medium (which is a refrigerant in this experiment and is referred to as a refrigerant hereinafter) inside a case was measured. In Specimens 1 to 7, a cross-sectional area inside the case was 196 mm² and a passage length inside the case was 100 mm. Further, a discharge pressure of a pump supplying the refrigerant to the MCM heat exchanger was set to 0.3 MPa. Furthermore, water was used as the refrigerant. A filling rate (%) and a contact area (m²) were calculated based on a wire diameter and a particle diameter of MCM and a volume inside the case.

In Specimens 1 and 2, particles were filled into the case, in Specimens 3 to 5, the wires were bundled and filled into the case, and in Specimens 6 and 7, a stranded wire obtained by twisting three wires was filled into the case.

Here, in the experiment for measuring the average flow rate of the refrigerant, the kind of the material constituting the wire and the particle does not affect the experiment result. Therefore, in the following specimens, a copper material is used in place of MCM such as gadolinium.

### <Specimen 1>

In Specimen 1, particles having a particle diameter of 0.3 mm and formed of gadolinium (Gd) are filled into the case, the amount of used particles is 130 g, the filling rate of the particles inside the case is 60%, and the contact area of the particles with the refrigerant is 0.33 m².

### <Specimen 2>

In Specimen 2, particles having a particle diameter of 0.5 mm and formed of gadolinium (Gd) are filled into the case, the amount of used particles is 130 g, the filling rate of the particles inside the case is 60%, and the contact area of the particles with the refrigerant is 0.19 m².

### <Specimen 3>

In Specimen 3, a bundle of wires formed of copper (Cu) and having a wire diameter of 0.12 mm is filled in the case, the amount of the used wire is 140 g, the filling rate of the wires in the case is 79%, and the contact area of the wire with the refrigerant is 0.54 m².

### <Specimen 4>

In Specimen 4, a bundle of wires formed of copper (Cu) and having a wire diameter of 0.18 mm is filled in the case, the amount of the used wire is 140 g, the filling rate of the wires in the case is 79%, and the contact area of the wire with the refrigerant is 0.33 m².

### <Specimen 5>

In Specimen 5, a bundle of wires formed of copper (Cu) and having a wire diameter of 0.25 mm is filled in the case, the amount of the used wire is 140 g, the filling rate of the wires in the case is 79%, and the contact area of the wire with the refrigerant is 0.25 m².

### <Specimen 6>

In Specimen 6, three wires formed of copper (Cu) and having a wire diameter of 0.18 mm are twisted, a bundle of the stranded wires is filled in the case, the amount of the used wire is 100 g, the filling rate of the wires in the case is 60%, and the contact area of the wire with the refrigerant is 0.28 m².

### <Specimen 7>

In Specimen 7, three wires formed of copper (Cu) and having a wire diameter of 0.25 mm are twisted, a bundle of the stranded wires is filled in the case, the amount of the used wire is 100 g, the filling rate of the wires in the case is 60%, and the contact area of the wire with the refrigerant is 0.22 m².

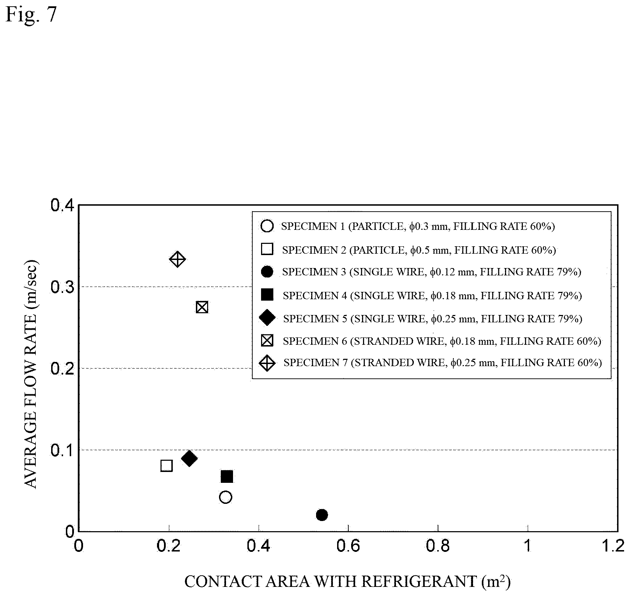

Fig. 7 is a graph illustrating a relation between the contact area (m²) of the filling material (particles or wires) with the refrigerant of Specimens 1 to 7 and the average flow rate (m/sec) of the refrigerant of Specimens 1 to 7. As understood from this graph, the average flow rate of the refrigerant of Specimens 6 and 7 in which the stranded wires are bundled and filled in the case is larger than the average flow rate of the refrigerant of Specimens 1 to 3 in which the particles are filled in the case or Specimens 4 and 5 in which the wires are bundled and filled in the case. Hereinafter, this will be described in more detail.

When Specimen 1 in which particles having a particle diameter of 0.3 mm are filled in the case is compared with Specimen 3 in which wires having a wire diameter of 0.12 mm are bundled and are filled in the case, it is observed that the contact area with the refrigerant of Specimen 3 is remarkably larger than that of Specimen 1 (to have a difference of 0.2 m² or more) and the average flow rate of the refrigerant of Specimen 3 is remarkably smaller than that of Specimen 1 (to be about 1/3).

When Specimen 1 in which particles having a particle diameter of 0.3 mm are filled in the case is compared with Specimen 2 in which particles having a particle diameter of 0.5 mm are filled in the case, it is observed that the contact area with the refrigerant decreases and the average flow rate of the refrigerant increases as the particle diameter increases. Further, when Specimen 3 in which wires having a wire diameter of 0.12 mm are bundled and filled in the case, Specimen 4 in which wires having a wire diameter of 0.18 mm are bundled and filled in the case, and Specimen 5 in which wires having a wire diameter of 0.25 mm are bundled and filled in the case are compared with one another, it is observed that the contact area with the refrigerant decreases and the average flow rate of the refrigerant increases as the wire diameter increases.

When Specimen 1 in which particles having a particle diameter of 0.3 mm are filled in the case is compared with Specimen 4 in which wires having a wire diameter of 0.18 mm are bundled and filled in the case, it is observed that the contact area with the refrigerant is the same and the average flow rate of the refrigerant of Specimen 4 is larger than that of Specimen 1. Further, when Specimen 2 in which particles having a particle diameter of 0.5 mm are filled in the case is compared with Specimen 7 in which wires having a wire diameter of 0.25 mm are twisted and a bundle of the stranded wires is filled, it is observed that the contact area with the refrigerant is the same and the average flow rate of the refrigerant of Specimen 7 is larger than that of Specimen 2.

Here, it is observed that a difference in average speed of the refrigerant between Specimen 4 (in which wires are directly filled) and Specimen 1 (in which particles are filled) is small to be about 0.2 m/sec and a difference in average speed of the refrigerant between Specimen 7 (in which stranded wires obtained by twisting wires are filled) and Specimen 2 (in which particles are filled) is about 2.5 m/sec and the latter case is remarkably larger than that of the former case.

Further, when Specimen 4 (in which wires are directly filled) is compared with Specimen 6 (in which wires are twisted and filled), it is observed that the contact area of the refrigerant of Specimen 6 is smaller than that of Specimen 4 by a small amount (an amount smaller than 0.1 m²) and the average flow rate of the refrigerant of Specimen 6 is remarkably larger than that of Specimen 4 by an amount (four times or more). Further, when Specimen 5 (in which wires are directly filled) is compared with Specimen 7 (in which stranded wires obtained by twisting wires are filled), the contact area of the refrigerant of Specimen 7 is smaller than that of Specimen 5 by a small amount (an amount smaller than 0.1 m²) and the average flow rate of the refrigerant of Specimen 7 is remarkably larger than that of Specimen 5 by an amount (three times or more).

In this experiment, Specimens 11 and 12 were prepared as below and the output density (W/kg) of the magnetic heat pump device equipped with these specimens was measured. The output density measurement experiment was performed while changing the cycle frequency (Hz) of the magnetic heat pump device. One reciprocating movement of the piston 30 between the "first position" and the "second position" corresponds to one cycle of the magnetic heat pump device. Further, the output density (W/kg) corresponds to the refrigeration capacity (W) of the magnetic heat pump device with respect to the mass (kg) per unit volume of the MCM filled in the MCM heat exchanger.

In Specimens 11 and 12, the cross-sectional area in the case is 196 mm² and the passage length in the case is 100 mm. Further, the discharge pressure of the pump supplying the refrigerant to the MCM heat exchanger is set to 0.3 MPa.

### <Specimen 11>

In Specimen 11, particles having a particle diameter of 0.3 mm and formed of gadolinium (Gd) are filled into the case, the amount of used particles is 100 g, the filling rate of the particles inside the case is 60%, and the contact area of the particles with the refrigerant is 0.33 m². Specimen 11 has the same specification as Specimen 1.

### <Specimen 12>

In Specimen 12, three wires formed of gadolinium (Gd) and having a wire diameter of 0.25 mm are twisted, a bundle of the stranded wires is filled in the case, the amount of the used wire is 100 g, the filling rate of the wires in the case is 60%, and the contact area of the wire with the refrigerant is 0.22 m². Specimen 12 has the same specification as Specimen 7 except for the type of wire.

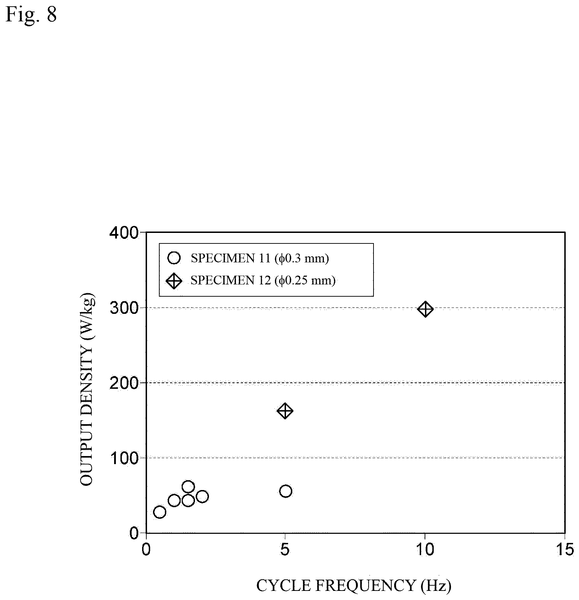

Fig. 8 is a graph illustrating a relation between the cycle frequency (Hz) of the magnetic heat pump device provided with Specimen 11 or Specimen 12 and the output density (W/kg) of the magnetic heat pump device. As illustrated in the graph, when Specimen 11 (in which particles are filled) is compared with Specimen 12 (in which stranded wires obtained by twisting wires are filled) at a cycle frequency of 5 Hz, it is observed that the output density of the magnetic heat pump device using Specimen 12 (in which particles are filled) is remarkably higher than (by two times or more) the output density of the magnetic heat pump device using Specimen 12 (in which stranded wires obtained by twisting wires are filled). Further, in the magnetic heat pump device using Specimen 11 (in which a fluid is filled), the output density is not remarkably increased even when the cycle frequency is increased. However, in the magnetic heat pump using Specimen 12 (in which stranded wires obtained by twisting wires are filled), the output density is remarkably increased when the cycle frequency is increased. In the magnetic heat pump device using Specimen 11 (in which particles are filled), since pressure loss is large, the cycle frequency cannot be increased to 10 Hz without increasing the discharge pressure of the pump. For that reason, it is not possible to measure the output density when the cycle frequency is increased to 10 Hz in the magnetic heat pump device using particles.

In this way, when the stranded wires are bundled and filled in the case, it is possible to efficiently output (discharge) the refrigerant in comparison with a case where particles are filled in the case or a case where wires are directly bundled and filled in the case. Accordingly, it is possible to improve the heat exchange ability in the magnetic heat pump device using MCM.

As described above, the first MCM heat exchanger 10 according to this embodiment includes the plurality of stranded wires 12 each obtained by twisting at least two MCM wires 121, the assembly 11 which is a bundle of the plurality of stranded wires 12 is accommodated in the case 13, and the plurality of stranded wires 12 are filled in the case 13. Accordingly, it is possible to minimize a decrease in contact area with the MCM liquid medium or keep the substantially same contact area in comparison with a case where particles are filled in the case 13 or a case where wires are directly filled therein. In addition, a gap between MCMs, that is, a medium passage is enlarged, and the pressure loss of the liquid medium can be decreased. Accordingly, it is possible to improve the heat exchange efficiency of the first MCM heat exchanger 10.

Here, when wires are directly filled in the case 13, a gap between the wires cannot be uniformly formed as long as the wires are not filled as dense as possible. For that reason, when the wires having a small wire diameter are filled as dense as possible, a gap between the wires is uniformly set, but since a gap between the wires is uniformly narrowed, pressure loss of the liquid medium in the case 13 uniformly increases. Accordingly, the heat exchange efficiency uniformly decreases in the entire area of the case 13. Meanwhile, when the wires are not filled as dense as possible, a gap between the wires becomes non-uniform and thus pressure loss of the liquid medium in the case 13 becomes non-uniform. Accordingly, a position having a low heat exchange rate is generated in the case 13.

On the contrary, in the first MCM heat exchanger 10 according to this embodiment, since the assembly 11 which is a bundle of at least two stranded wires 12 is accommodated in the case 13 and the stranded wires 12 are filled in the case, it is possible to form a large gap between the stranded wires 12 in comparison with a case where the wires 121 are filled as dense as possible. Further, since a gap between the stranded wires 12 can be uniformly formed, pressure loss of the liquid medium in the case 13 can be uniformly set. Accordingly, since it is possible to obtain the uniform heat exchange efficiency in the case 13, it is possible to uniformly improve the heat exchange efficiency in the entire area of the case 13.

Particularly, in the first MCM heat exchanger 10 according to this embodiment, since the stranded wire 12 is obtained by twisting three wires 121, it is possible to stabilize the cross-sectional shape of the stranded wire 12. Thus, since it is possible to further effectively obtain a uniform gap between the wires 121, it is possible to further obtain uniform pressure loss of the liquid medium in the case 13. Thus, it is possible to further effectively obtain the uniform heat exchange efficiency in the case 13.

The "first MCM heat exchanger 10" and the "second MCM heat exchanger 20" of the above-described embodiment correspond to an example of the "heat exchanger" of the invention, the "wire 121" and the "wire 221" of the above-described embodiment correspond to an example of the "wire" of the invention, the "stranded wire 12" and the "stranded wire 22" of the above-described embodiment correspond to an example of the "linear body" and the "stranded wire" of the invention, and the "case 13" and the "case 23" of the above-described embodiment correspond to an example of the "case" of the invention.

The above-described embodiment is used to facilitate the understanding of the invention and does not limit the invention. Thus, the components disclosed in the above-described embodiment include all modifications in design and equivalents belonging to the technical scope of the invention.

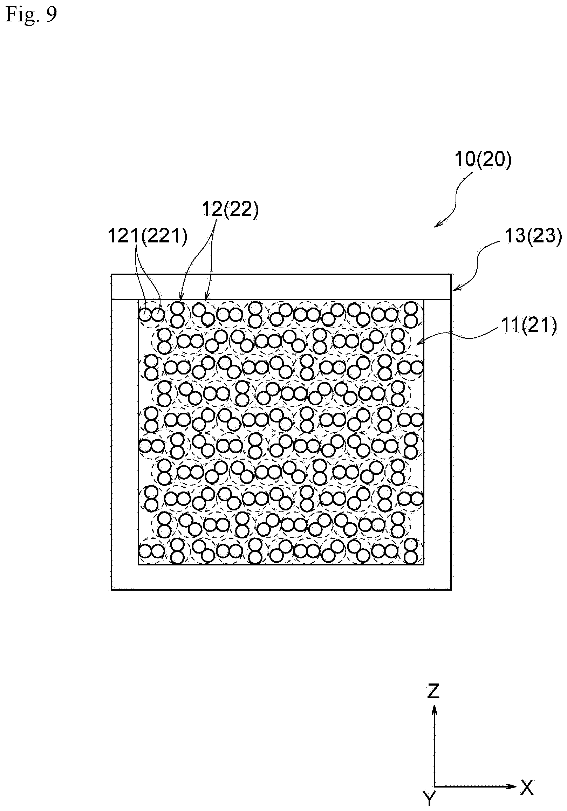

For example, in the above-described embodiment, the stranded wire 12 obtained by twisting three wires 121 is used. However, as illustrated in Fig. 9, the stranded wire 12 may be obtained by twisting two wires 121 or the stranded wire 12 may be obtained by twisting four wires 121. Here, in a case where the stranded wire 12 is obtained by twisting five or six wires 121 and the wires 121 are twisted so that the outer periphery of the stranded wire 12 has a circular shape, a gap formed inside the stranded wire 12 becomes larger and thus the shape of the stranded wire 12 is easily collapsed. Further, in a case where the stranded wire 12 is obtained by twisting seven or more wires 121, six wires 121 are twisted to the periphery of one wire 121 and thus an effect of securing the liquid medium passage is decreased. On the contrary, in a case where the stranded wire 12 is obtained by twisting two to four wires 121, a gap formed inside the stranded wire 12 becomes smaller. Accordingly, it is possible to easily twist the wires 121 and to suppress the collapse of the shape of the stranded wire 12. Further, the effect of securing the liquid medium passage is increased.

Further, the configuration of the magnetic heat pump device is an example and the heat exchanger manufactured according to the manufacturing method of the invention may be applied to another magnetic heat pump device of an AMR (Active Magnetic Refrigeration) type.

### EXPLANATIONS OF LETTERS OR NUMERALS

- 1:: magnetic heat pump device
- 10:: first MCM heat exchanger
- 11:: assembly
- 12:: stranded wire
- 121:: wire
- 13:: case
- 131:: first opening
- 132:: second opening
- 16:: first adapter
- 161:: first connection port
- 17:: second adapter
- 171:: second connection port
- 20:: second MCM heat exchanger
- 21:: assembly
- 22:: stranded wire
- 221:: wire
- 23:: case
- 231:: third opening
- 232:: fourth opening
- 26:: third adapter
- 261:: third connection port
- 27:: fourth adapter
- 271:: fourth connection port
- 30:: piston
- 35:: actuator
- 40:: permanent magnet
- 50:: low temperature side heat exchanger
- 60:: high temperature side heat exchanger
- 70:: pump
- 81:: first low temperature side pipe
- 82:: second low temperature side pipe
- 83:: first high temperature side pipe
- 84:: second high temperature side pipe
- 90:: switching valve

## Claims

1. A heat exchanger comprising:
linear bodies formed of a magnetocaloric material having a magnetocaloric effect; and
a case filled with the linear bodies, wherein
each of the linear bodies is a stranded wire obtained by twisting at least two wires.

2. The heat exchanger according to claim 1, wherein
the stranded wire is obtained by twisting two to four wires.

3. A magnetic heat pump device comprising:
the heat exchanger according to claim 1 or 2.
